(19) Europäisches Patentamt
European Patent Office
Office européen des brevets

(11) Numéro de publication: **0 325 875 B1**

(12) **FASCICULE DE BREVET EUROPEEN**

(45) Date de publication de fascicule du brevet: **24.02.93**

(51) Int. Cl.[5]: **C08F 283/12**, C08G 77/42, G02B 1/04

(21) Numéro de dépôt: **88403301.0**

(22) Date de dépôt: **23.12.88**

(54) **Matériau polymère à réseaux interpénétrés polysiloxane-polyacrylique, son procédé de fabrication, et articles moulés obtenus.**

(30) Priorité: **29.12.87 FR 8718317**

(43) Date de publication de la demande:
**02.08.89 Bulletin 89/31**

(45) Mention de la délivrance du brevet:
**24.02.93 Bulletin 93/08**

(84) Etats contractants désignés:
**AT BE CH DE ES FR GB GR IT LI LU NL SE**

(56) Documents cités:
**EP-A- 0 019 738**
**FR-A- 2 270 289**
**FR-A- 2 365 606**
**US-A- 4 618 644**

(73) Titulaire: **ELF ATOCHEM S.A.**
**4 & 8, Cours Michelet La Défense 10**
**F-92800 Puteaux(FR)**

(72) Inventeur: **He, Xiongwei c/o Material Science Research Inst.**
**South China University of Technology**
**Gangzhou (Province de Canton)(CN)**
Inventeur: **Herz, Jean Edouard**
**17, rue Principale**
**Saint-Pierre F-67140 Barr(FR)**
Inventeur: **Meyer, Guy**
**13, rue Jérôme Bosch**
**F-67200 Strasbourg(FR)**
Inventeur: **Widmaier, Jean-Michel**
**43, rue Aubry-et-Rau**
**F-67000 Strasbourg(FR)**

(74) Mandataire: **Chaillot, Geneviève**
**Cabinet CHAILLOT 21, avenue Louise de Bettignies**
**F-92700 Colombes (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.5x/3.0.1)

## Description

La présente invention se rapporte, d'une part, à un matériau polymère à réseaux interpénétrés polysiloxane-polyacrylique, d'autre part, à un procédé de fabrication d'articles faits de ce matériau polymère, et enfin aux articles éventuellement transparents constitués dudit matériau, ces articles pouvant constituer des objets de diverses formes, et notamment se présenter sous la forme de plaques, de feuilles ou de films, et trouvant application comme vitrages, écrans pare-balles, etc.

On connaît, dans la chimie des polymères, les réseaux polymères interpénétrés (IPNs) qui résultent de l'interconnexion de deux polymères par imbrication de leurs chaînes, chaque polymère étant principalement réticulé avec lui-même.

On sait par ailleurs que les organopolysiloxanes, par exemple les polydiméthylsiloxanes (PDMS), ont des propriétés physico-chimiques particulières, parmi lesquelles on peut mentionner une basse température de transition vitreuse, une grande flexibilité, une faible mouillabilité et une perméabilité aux gaz élevée. On en a conclu que ces caractéristiques pourraient conduire à des propriétés intéressantes des IPNs. C'est ainsi que des études ont été entreprises sur les réseaux polymères interpénétrés à base d'organopolysiloxanes.

Ainsi, la demande de brevet français n° 2 270 289 et son certificat d'addition n° 2 365 606 décrivent un procédé de fabrication de corps façonnés, en particulier de lentilles de contact, à base d'IPNs polymère hydrophobe/polymère hydrophile, le réseau hydrophobe étant formé par réticulation de prépolymères d'organopolysiloxanes renfermant des groupes fonctionnels vinyle, et le réseau hydrophile étant formé par polymérisation de monoesters de l'acide acrylique ou méthacrylique ayant au moins un groupe fonctionnel hydrophile. De même, la demande de brevet européen n° 19 738 concerne un procédé de fabrication de lentilles de contact par polymérisation d'un (méth)acrylate d'hydroxyalkyle, au moyen de radicaux libres, en présence d'un polyorganosiloxane, au contact d'une surface de moulage convexe. On connaît également par le brevet américain US-A-4 618 644, des compositions réticulables utiles pour former des polymères à réseaux interpénétrés, ces compositions comprenant une résine silicone qui est un copolymère à blocs, obtenu notamment à partir de polydiméthylsiloxane terminé par des groupes silanol et de phényltrichlorosilane, méthyltrichlorosilane et méthacryloxypropylméthyldichlorosilane, ladite résine, se présentant sous la forme d'une poudre, étant dispersée dans un monomère oléfinique, de préférence, vinylaromatique, dans lequel elle est solubilisée ; ce document décrit donc la formation d'un copolymère, puis son gonflement en présence d'un monomère, et la polymérisation de ce dernier in situ.

La présente invention propose une matière polymère consistant en un IPN polysiloxane/polyacrylique qui présente un bon équilibre de propriétés mécaniques et optiques, et qui conduit à des objets très divers et pouvant être transparents selon le choix des constituants de départ, ces articles possédant de façon favorable les avantages complémentaires tenant au réseau polysiloxane d'avoir une faible mouillabilité de surface et de présenter une surface lisse dont on peut, en cas de rayures, reconstituer l'état initial par un simple chauffage.

Sous un premier aspect, l'invention concerne une composition pour une matière polymère devant former deux réseaux polymères interpénétrés, l'un étant un réseau de polysiloxane (1), et l'autre étant un réseau acrylique (2), caractérisée par le fait que ledit réseau (1) est constitué à partir de :

(1a) en tant que constituant de base, au moins un polymère précurseur de masse moléculaire comprise entre 300 et 30 000, choisi parmi les polydiméthylsiloxanes $\alpha,\omega$-dihydroxylés et les poly-(diméthyldiphényl)siloxanes $\alpha,\omega$-dihydroxylés renfermant au minimum 70% de motifs diméthylsiloxane ;

(1b) une quantité efficace d'au moins un agent de réticulation ($1b_1$) du (ou des) polymère(s) devant être formé(s) à partir de (1a) et/ou d'au moins un agent de pontage ($1b_2$) destiné à assurer la réticulation de ce (ou ces) polymère(s) en formant aussi une liaison entre les réseaux (1) et (2) ; et

(1c) au moins un catalyseur de polycondensation en vue de la formation dudit réseau (1) ;

et ledit réseau (2) est constitué à partir de :

(2a) en tant que constituant de base, au moins un monomère principal, acrylique ou méthacrylique, ne comportant pas de groupe fonctionnel hydrophile ;

(2b) le cas échéant, une quantité efficace d'au moins un agent de réticulation du (ou des) monomère(s) (2a) ;

(2c) au moins un initiateur de polymérisation radicalaire en vue de la formation dudit réseau (2) ; et

(2d) le cas échéant jusqu'à 20% en poids par rapport au(x) monomère(s) (2a) d'au moins un monomère copolymérisable avec le (ou les) monomère(s) (2a) ;

la composition polymère renfermant également :

(I) au moins un inhibiteur de formation de radicaux libres, en quantité suffisante pour empêcher au départ la production, par l'initiateur (2c), de radicaux libres qui, par combinaison avec le catalyseur (1c),

annihileraient les propriétés catalytiques de ce dernier, à savoir dans une proportion comprise entre 0,1% et 0,2% en poids par rapport au(x) monomère(s) (2a),

tous les constituants de la composition étant destinés à être mélangés simultanément.

Les constituants (1a) et (2a) sont généralement utilisés dans un rapport pondéral de 5/95 à 95/5.

Les deux réseaux macromoléculaires sont interpénétrés physiquement constituant des IPNs lorsqu'un constituant (2b) est présent et des réseaux semi-interpénétrés (par abréviation semi-IPNs), en l'absence de (2b). Ces réseaux sont éventuellement consolidés par des liaisons de greffage entre les deux réseaux lorsque le constituant (1b) est ou comprend un agent de pontage.

Sous un second aspect, l'invention concerne un procédé de fabrication d'un article en une matière polymère dont la composition est telle que définie ci-dessus, ce procédé étant caractérisé par le fait que :

(I) dans une première étape, on réalise le mélange de tous les constituants des réseaux (1) et (2), le constituant (1c) étant incorporé en dernier lieu dans ledit mélange, lequel contient également une quantité du (ou des) inhibiteur(s) (I) de formation de radicaux libres, qui est suffisante pour empêcher au départ la production, par l'initiateur (2c), de radicaux libres qui, par combinaison avec le catalyseur (1c), annihileraient les propriétés catalytiques de ce dernier, afin de permettre la formation du réseau (1) avant celle du réseau (2) ;

(II) dans une seconde étape, on introduit le mélange obtenu dans un moule, à la température ambiante ;

(III) dans une troisième étape, dès que le mélange placé dans le moule a formé un gel, on porte la température à une valeur comprise entre 40 °C et 80 °C environ ; et

(IV) dans une quatrième étape, on laisse refroidir le mélange polymérisé dans le moule, avant de procéder au démoulage.

A. LES CONSTITUANTS DU RESEAU (1)

Comme constituant (1a), on choisit notamment un polydiméthylsiloxane ou un polydiméthyldiphénylsiloxane de masse moléculaire comprise entre 300 et 30 000 environ, de préférence, de masse moléculaire inférieure à 5000 environ. Dans le cas où l'on utilise un polydiméthyldiphénylsiloxane $\alpha,\omega$-dihydroxylé, celui-ci renferme de préférence au moins 85% de motifs diméthylsiloxane. Les constituants (1a) que l'on préfère sont cependant les polydiméthylsiloxanes de masse moléculaire inférieure à 5 000 environ.

Comme agent de réticulation ($1b_1$) on peut utiliser notamment :

. des trialkyloxysilanes de formule :

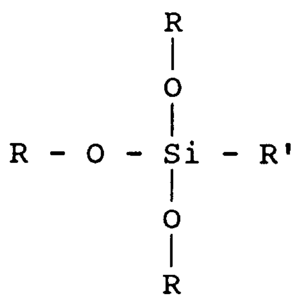

où :

- chaque R est un groupe méthyle ou éthyle ; et
- R' représente hydrogène, méthyle ou éthyle ;

. des tétraalkyloxysilanes de formule :

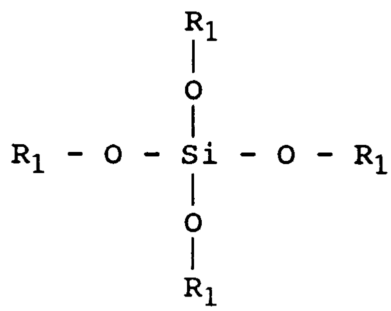

où :

- chaque $R_1$ représente méthyle, éthyle, propyle ou butyle,

ainsi que

. des composés de formule :

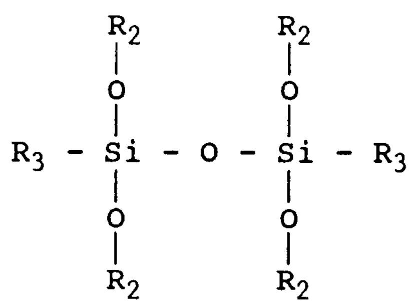

où :

- $R_2$ signifie méthyle ; et
- $R_3$ signifie méthyle ou éthyle.

Comme agents de pontage ($1b_2$), on utilise notamment un trialkyloxysilane comportant un groupe insaturé, tel qu'un groupe vinyle, acryle, méthacryle, allyle, etc.

On utilise le constituant (1b) en une quantité telle que le rapport du nombre des fonctions assurant la formation du réseau dudit constituant (1b) au nombre de fonctions SiOH du prépolymère (1a) (ou rapport stoechiométrique K de formation du réseau (1)) soit compris entre 1 et 4 environ.

Quant au catalyseur (1c), on le choisit avantageusement parmi les sels organiques de l'étain, du zinc et du fer, ainsi que parmi les titanates. De préférence, on utilise l'octoate stanneux. Le catalyseur (1c) est, de préférence, utilisé dans une proportion comprise entre 0,5% et 2,5% en poids environ par rapport à l'ensemble de l'IPN.

B. LES CONSTITUANTS DU RESEAU (2)

En ce qui concerne les monomères principaux acryliques et méthacryliques (2a), on les choisit notamment parmi les acrylates et méthacrylates d'alkyle en $C_1$-$C_{12}$. De façon particulièrement préférée, on utilise le méthacrylate de méthyle.

Le réseau (2) peut, le cas échéant, comprendre :

(2d) au moins un monomère à insaturation éthylénique copolymérisable pouvant être choisi notamment parmi les hydrocarbures vinylaromatiques, comme le styrène, l'α-méthylstyrène, le tert.-butyl-styrène, le vinyltoluène, et les imides tels que le N-phénylmaléimide.

Lorsque de tels comonomères sont ajoutés, ils sont présents en une proportion totale au plus égale à 20% en poids par rapport aux monomères principaux (2a).

Quant au constituant (2b), qui est présent notamment en une quantité au plus égale à 10% en poids environ par rapport aux monomères (2a), on le choisit notamment parmi :

- des composés ayant au moins deux doubles liaisons polymérisables ; et

- des composés ayant au moins une double liaison polymérisable et au moins un groupe fonctionnel réactif avec le monomère acrylique et, le cas échéant, son comonomère, lorsqu'un tel comonomère est présent, comme indiqué ci-après.

Comme exemples de composés ayant au moins deux doubles liaisons polymérisables utilisables comme constituants (2b), on peut citer :

(a) les composés di- ou polyvinyliques, tels que notamment le divinylbenzène, le divinyltoluène, le divinylxylène, l'éther divinylique, la divinylcétone et le trivinylbenzène ;

(b) les di- ou polyesters d'acides mono- ou polycarboxyliques insaturés avec des polyols, tels que les esters des acides di- ou tri(méth)acryliques avec des polyols (tels que l'éthylène glycol, le triméthylolpropane, le glycérol, les polyoxyéthylène glycols, les polyoxypropylène glycols, etc), les polyesters insaturés (que l'on peut obtenir par réaction de l'un quelconque des polyols précités avec un acide insaturé tel que l'acide maléique), etc.

(c) les bis(méth)acrylamides, tels que la N,N-méthylène-bis-acrylamide ;

(d) les esters carbamyliques que l'on peut obtenir en faisant réagir des polyisocyanates (tels que le toluène diisocyanate, l'hexaméthylène diisocyanate, le 4,4'-diphénylméthanediisocyanate, etc. et les prépolymères contenant un groupe NCO obtenus en faisant réagir un tel diisocyanate avec des composés contenant des atomes d'hydrogène actifs), avec des monomères contenant des groupes hydroxyle. De tels esters sont notamment ceux des acides di(méth)acryliques que l'on peut obtenir en faisant réagir les diisocyanates précités avec le (méth)acrylate d'hydroxyéthyle ;

(e) les éthers di-ou poly(méth)allyliques de polyols, tels que les alkylèneglycols, les glycérols, les polyalkylèneglycols, les polyoxyalkylènepolyols, les hydrates de carbone, etc.), tels que l'éther diallylique du polyéthylène glycol, l'amidon allylé et la cellulose allylée ;

(f) les esters di- ou polyallyliques d'acides polycarboxyliques, tels que le phtalate de diallyle, l'adipate de diallyle, etc ; et

(g) les esters d'acides mono- ou polycarboxyliques insaturés avec des éthers mono(méth)allyliques de polyols, tels que l'ester de l'acide (méth)acrylique avec l'éther mono allylique du polyéthylène glycol.

Comme composés ayant au moins une double liaison polymérisable et au moins un groupe fonctionnel réactif avec le monomère (1a), et, le cas échéant, son comonomère, on peut citer, à titre d'exemples, la N-méthylol(méth)acrylamide et le (méth)acrylate de glycidyle.

Parmi les constituants (2b) que l'on préfère, on peut citer les di(méth)acrylates d'hexanediol, de néopentylglycol, de mono-, di- ou tri- éthylèneglycol et de butanediol, les tri(méth)acrylates de triméthylolpropane et de pentaérytritol, ainsi que le tétra(méth)acrylate de pentaérytritol.

L'initiateur de polymérisation radicalaire (2c) peut être choisi notamment parmi les persulfates, les peroxydes, les hydroperoxydes et les composés diazoïques, tels que, par exemple, l'azobis-isobutyronitrile, le 2,2'-azobis-(diméthyl-2,4 valéronitrile), le 1,1'-azobis-1-cyclohexanecarbonitrile, le perbenzoate de tertiobutyle, le peroxy-isopropylcarbonate de tertiobutyle, etc. ; lorsqu'un persulfate de métal alcalin est choisi en tant qu'initiateur, il peut être utilisé en combinaison avec au moins un réducteur choisi parmi les polyhydrophénols, le sulfite et le bisulfite de sodium, le diméthylaminopropionitrile, les diazomercaptans et les ferricyanures. L'initiateur et, le cas échéant, le réducteur, sont utilisables à raison d'environ 0,1% à 2% chacun en poids par rapport au monomère acrylique ou méthacrylique (2a) présent dans le mélange.

C. L'INHIBITEUR (I)

On peut choisir l'inhibiteur (I) parmi les composés inhibiteurs classiques suivants, par exemple parmi les phénols à encombrement stérique, tels que le tert.-butyl-4 pyrocatéchol et le di-tert.-butyl-2,6 méthyl-4 phénol, l'hydroquinone et la benzophénone. L'inhibiteur (I) est utilisé dans une proportion comprise entre environ 0,1% et 0,2% en poids par rapport au(x) monomère(s) (2a).

Si l'on utilise une proportion d'inhibiteur (I) inférieure à 0,1% en poids, on n'assurera pas la protection du catalyseur (1c), autrement dit on n'assurera pas la formation du réseau (1) ; par ailleurs, si l'on utilise une proportion d'inhibiteur (I) dépassant 0,2 % en poids, on devra attendre très longtemps pour voir le gel se former (qui est généralement de l'ordre de 0,3 - 2 heures), si bien qu'il est sans intérêt de dépasser la valeur indiquée de 0,2 %.

D. LES ADJUVANTS POSSIBLES

Le matériau polymère de l'invention peut également renfermer :

- une quantité efficace d'au moins un limiteur de chaîne pouvant notamment être choisi parmi les terpènes monocycliques diinsaturés et les terpènes bicycliques monoinsaturés, de préférence, en une

proportion comprise entre 0,05% et 1% environ en poids par rapport à la quantité totale de monomère (2a) ;

- une quantité efficace d'au moins un agent ignifugeant, tel que, notamment, le méthacrylate de tribromophényle ou des composés organophosphorés, comme ceux décrits dans les brevets EP-A 117 174 et FR-A-2 567 127 ;
- une quantité efficace d'au moins un pigment soluble dans le (ou les) monomère(s) (2a) ;
- une quantité efficace d'au moins un absorbeur de rayonnement ultraviolet, de préférence, choisi de manière à ne pas être susceptible de réagir avec les constituants et/ou avec les catalyseurs ; et
- une quantité efficace d'au moins un agent démoulant choisi, par exemple, parmi l'acide stéarique, le dioctylsulfosuccinate de sodium et les esters phosphoriques organiques (comme, par exemple, le PHOSPHAC D10N commercialisé par la Société PROTEX) ; cet agent démoulant est généralement utilisé à raison d'environ 0,01 % a 2% en poids par rapport à la quantité totale de monomère acrylique ou méthacrylique (2a) présent dans le mélange ; la présence d'un tel agent démoulant est plus particulièrement recommandée lorsque le moule utilisé est constitué d'un verre minéral et/ou lorsque l'on désire obtenir des plaques planes transparentes possédant un parfait état de surface.

E. LE PROCEDE DE L'INVENTION

Comme déjà indiqué, la première étape est celle d'un simple mélange de tous les constituants des deux réseaux, à la température ambinate, sachant qu'on a pris soin de n'introduire le catalyseur (1c) qu'au dernier moment.

A la deuxième étape, on introduit dans un moule, à la température ambiante, le mélange obtenu à la première étape, éventuellement après dégazage.

Lorsque l'on désire obtenir des plaques coulées, les moules utilisés peuvent être du type de ceux employés dans la fabrication du polyméthacrylate de méthyle. Ainsi, ils sont constitués notamment par deux plaques de verre planes, espacées par un jonc périphérique, les plaques étant maintenues par des pinces de fermeture du moule. Une fois le jonc positionné mécaniquement entre les plaques, les pinces sont disposées sur trois côtés, le mélange est introduit par un tuyau par le quatrième côté du moule ; après remplissage, les pinces manquantes sont mises en place et l'air est chassé du moule. Au cours du cycle de polymérisation, le moule subit des variations de volume qui sont les conséquences des variations de la masse volumique du mélange réactionnel avec la température et le degré de polymérisation. De telles variations de volume sont supportées partiellement par le jonc.

Pour favoriser le démoulage des plaques coulées, il peut être souhaitable de prévoir un moule constitué d'un verre minéral traité, par exemple un verre minéral revêtu d'une couche minérale, telle qu'une couche d'oxyde métallique, durcie par pyrolyse.

En outre, pour éviter que la formation des réseaux (1) et (2) ne commence avant le moment souhaité, il peut être avantageux d'utiliser un moule constitué d'un matériau permettant d'éviter la photocatalyse de polymérisation de l'un ou l'autre des monomères présents. Le moule utilisé pour la mise en oeuvre du procédé selon la présente invention doit par ailleurs résister à la température maximale du mélange réactionnel et être non réactif ou insoluble au contact de la charge liquide. Des moules appropriés sont donc réalisés aussi à partir de substances telles que, par exemple, le polyéthylène, le polypropylène, le polyéthylène téréphatalate, des élastomères de silicone, le Téflon, et des métaux comme par exemple l'aluminium, le cuivre, le nickel ou des alliages comme le laiton ou l'acier inoxydable. Un moule en métal sera plus particulièrement adapté lorsque le procédé selon l'invention est mis en oeuvre de manière continue, par exemple dans une installation du type laminoir.

Les objets de l'invention n'étant pas nécessairement plans, on sera amené à réaliser d'autres formes de moules, également dans les matériaux indiqués ci-dessus.

Par ailleurs, notamment dans le cas de la fabrication de lentilles de contact, on peut former directement celles-ci en versant le mélange réactionnel dans un moule de forme appropriée et en utilisant des techniques de coulée ou coulée centrifuge.

Lorsque tous les composants du système sont dans le moule, il se forme d'abord un gel, indiquant que le réseau élastomérique (1) s'est formé. Ensuite, lorsqu'on chauffe le moule (troisième étape du procédé), l'initiateur de radicaux libres (2c) produit, malgré la présence de l'inhibiteur (I), suffisamment de radicaux pour permettre la polymérisation devant constituer le réseau (2).

En ce qui concerne la durée de cette troisième étape, on peut indiquer une durée totale comprise de préférence entre 2 et 60 heures environ (sous pression atmosphérique).

Après le démoulage, on fait généralement suivre par un recuit à une température au minimum égale à 70 ° C, le cas échéant, sous vide.

Lorsque l'on désire obtenir des articles transparents (verres organiques), on choisit un constituant (1a) de faible masse moléculaire, et/ou on augmente le rapport stoechiométrique de formation du réseau (1) (rapport K), et/ou on crée des liaisons covalentes de greffage entre les réseaux (1 ) et (2) par l'utilisation de l'agent de pontage tel que défini ci-dessus. Toutefois, un compromis est à trouver pour éviter que le matériau ne perde en élasticité ce qu'il gagne en transparence. La transparence déterminée par la mesure de la transmission lumineuse (norme ASTM D 1003) peut atteindre des valeurs aussi élevées que 90%.

Les objets obtenus par le procédé de l'invention sont également intéressants pour leurs propriétés superficielles, qui sont dominées par celles du réseau (1) quelle que soit la composition des IPNs. La couche superficielle d'un objet obtenue par le procédé de l'invention est constituée par une couche de polymère du réseau (1) sur une épaisseur de l'ordre de 5 nm. Ainsi, la mouillabilité de ces objets, notamment par l'eau, est très faible. En outre, il a été vérifié que, si l'on enlève cette couche superficielle par abrasion, l'énergie superficielle augmente, mais qu'au bout d'un certain temps (12 mois), on retrouve sa valeur initiale. Il a également été vérifié qu'une plaque ayant été soumise à une abrasion, puis chauffée, retrouve très rapidement cette valeur initiale de l'énergie superficielle. Ainsi, si l'on réalise à partir du matériau de l'invention des produits transparents du type ≪verres organiques≫, ceux-ci présenteront l'avantage de pouvoir retouver, en cas de rayures, leur état de surface par un simple chauffage de courte durée.

Le procédé selon la présente invention permet entre autres la fabrication de plaques coulées à haute résistance aux chocs, ainsi que la fabrication de feuilles et de films. L'épaisseur des articles ainsi obtenus peut varier entre 1/10 de millimètre et 50 mm.

Ces plaques coulées selon l'invention trouvent une application particulièrement importante dans la réalisation de vitrages, d'enseignes publicitaires, d'écrans pare-balles utiles dans les différents secteurs de la sécurité civile. Secondairement, après pliage ou cintrage, ces plaques peuvent également être utilisées dans le domaine de l'orthopédie externe.

On décrira plus en détail ci-après, à titre indicatif et non limitatif, différentes fabrications de plaques coulées qui ont été effectuées par le procédé conforme à la présente invention. Les réactifs mis en oeuvre dans ces exemples ont été désignés par les abréviations suivantes :

PDMS : $\alpha$, $\omega$-disilanol polydiméthylsiloxane
MMA : méthacrylate de méthyle
TEOS : tétraéthyl orthosilicate
TMSPM : triméthoxysilyl propyl méthacrylate
OcSn : octoate stanneux
TRIM : triméthacrylate de triméthylolpropane
AIBN : azobis-isobutyronitrile
TBPC : tert.butyl-4 pyrocatéchol.

On a préparé seize plaques coulées par le procédé de l'invention (Exemples 1 à 16) en utilisant le mode opératoire suivant commun :

On agité pour bien homogénéiser le mélange réactionnel constitué par tous les constituants correspondant à une composition donnée, sauf le catalyseur OcSn ; ensuite, on ajoute ce catalyseur, qui permet le démarrage de la formation du réseau (1). Après avoir bien incorporé le catalyseur sous forte agitation, on injecte le mélange dans un moule constitué de deux plaques de verre et d'un jonc périphérique d'une épaisseur d'environ 3,5 mm. On laisse le moule à la température ambiante, à l'abri de la lumière, pendant 2 heures, avant de la chauffer à 60 °C, au moyen d'un bain d'eau thermostaté pendant 2 heures encore, en vue de l'amorçage du réseau (2). Ensuite, on transfère le moule dans une étuve réglée à 90 °C et on la laisse à cette température pendant 12 heures. Après démoulage, on procède à un recuit à 120 °C pendant 3 heures sous vide.

A partir de seize mélanges différents, on a préparé des plaques dont a recherché, pour chacune, la transparence (norme ASTM D 1003), ainsi que les énergies superficielles initialement puis après abrasion, puis après recuit (méthode de l'angle de goutte).

Les résultats obtenus sont rapportés dans le tableau ci-après.

Tableau

| Ex. n° | PDMS/PMMA(1) | PDMS1(2) (g) | PDMS2(3) (g) | TEOS (g) | TMSPM(4) (g) | K | OcSn (g) | MMA (g) | TRIM (g) | AIBN (g) | TBPC (g) | T(5) (%) | $\gamma_{s,o}^{(6)}$ ($mJ/m^2$) | $\gamma_{s,ab}^{(7)}$ ($mJ/m^2$) | $\gamma_{s,ab,tr}^{(8)}$ ($mJ/m^2$) |
|---|---|---|---|---|---|---|---|---|---|---|---|---|---|---|---|
| 1 | 30/70 | 24,9 | | 0,6 | | 1 | 2,1 | 56,7 | 3,0 | 0,3 | 0,06 | 0 | 25 | 35 | 24 |
| 2 | 50/50 | 39,2 | | 1,0 | | 1 | 2,0 | 38,3 | 2,0 | 0,2 | 0,04 | 0 | 24 | | |
| 3 | 60/40 | 17,6 | | 0,4 | | 1 | 0,8 | 11,4 | 0,6 | 0,06 | 0,01 | 0 | 24 | | |
| 4 | 85/15 | 49,8 | | 1,2 | | 1 | 1,6 | 8,6 | 0,5 | 0,04 | 0 01 | 0 | 24 | | |
| 5 | 30/70 | 9,9 | | 0,7 | | 3 | 0,9 | 23,6 | 1,2 | 0,1 | 0,02 | 17 | | | |
| 6 | 7,5/92,5 | 7,8 | | | 0,6 | 2 | 2,2 | 98,3 | 5,2 | 0,5 | 0,1 | 1 | | | |
| 7 | 10/90 | 10,4 | | | 0,8 | 2 | 2,2 | 95,9 | 5,0 | 0,5 | 0,1 | 24 | 28 | 48 | 27 |
| 8 | 30/70 | 25,0 | | | 2,0 | 2 | 2,2 | 61,0 | 3,2 | 0,3 | 0,06 | 45 | | | |
| 9 | 30/70 | 9,1 | | | 1,4 | 4 | 0,8 | 22,4 | 1,2 | 0,1 | 0,02 | 62 | | | |
| 10 | 70/30 | 51,9 | | | 4,1 | 2 | 2,0 | 23,0 | 1,2 | 0,1 | 0,02 | 46 | | | |
| 11 | 10/90 | | 9,9 | 1,2 | | 1 | 2,2 | 94,4 | 5,0 | 0,5 | 0,1 | 1 | 31 | 48 | 31 |
| 12 | 20/80 | | 19,8 | 2,4 | | 1 | 2,2 | 84,1 | 4,4 | 0,4 | 0,1 | 42 | | | |
| 13 | 5/95 | | 4,7 | | 1,8 | 2 | 2,6 | 117,2 | 6,1 | 0,6 | 0,1 | 88 | 38 | | |
| 14 | 10/90 | | 2,2 | | 0,8 | 2 | 0,6 | 26,4 | 1,4 | 0,1 | 0,02 | 85 | 35 | 50 | 36 |
| 15 | 30/70 | | 11,8 | | 4,6 | 2 | 1,0 | 36,7 | 1,9 | 0,2 | 0,04 | 85 | 32 | 46 | 31 |
| 16 | 50/50 | | 12,4 | | 4,8 | 2 | 0,6 | 16,3 | 0,9 | 0,09 | 0,02 | 81 | 31 | 41 | 30 |

Notes :

(1) Rapport en poids
(2) PDMS1 : α,ω-disilanol polydiméthylsiloxane de Mn 4200
(3) PDMS2 : α,ω-disilanol polydiméthylsiloxane de Mn 860
(4) K : rapport du nombre des fonctions Si-$OC_2H_5$ de TEOS au nombre des fonctions Si-OH de PDMS (ou rapport stoechiométrique de la formation du réseau PDMS).
(5) Transmission lumineuse des IPNs (λ = 700 nm), mesurée sur des échantillons ayant une épaisseur de 3,5 ± 0,2 mm
(6) $\gamma_{s,\ o}$ = énergie superficielle initiale des IPNs synthétisés
(7) $\gamma_{s,\ ab}$ = énergie superficielle de ces mêmes IPNs après qu'ils aient été soumis à une abrasion superficielle supérieure à au moins 100 µm
(8) $\gamma_{s,\ ab,\ tr}$ = énergie superficielle de ces IPNs abrasés, après qu'ils aient été traités par un recuit à 120 ° C, pendant au moins 2 heures.

Les résultats obtenus concernant la mesure des énergies superficielles montrent dans tous les cas le recouvrement de l'état de surface par chauffage.

**Revendications**
**Revendications pour les Etats contractants suivants : AT, BE, CH, DE, FR, GB, GR, IT, LI, LU, NL, SE**

**1.** Composition pour une matière polymère devant former deux réseaux polymères interpénétrés, l'un étant un réseau de polysiloxane (1), et l'autre étant un réseau acrylique (2), caractérisée par le fait que ledit réseau (1) est constitué à partir de :
(1a) en tant que constituant de base, au moins un polymère précurseur de masse moléculaire comprise entre 300 et 30 000, choisi parmi les polydiméthylsiloxanes α,ω-dihydroxylés et les poly-(diméthyldiphényl)siloxanes α,ω-dihydroxylés renfermant au minimum 70% de motifs diméthylsiloxane ;
(1b) une quantité efficace d'au moins un agent de réticulation ($1b_1$) du (ou des) polymère(s) devant être formé(s) à partir de (1a) et/ou d'au moins un agent de pontage ($1b_2$) destiné à assurer la réticulation de ce (ou ces) polymère(s) en formant aussi une liaison entre les réseaux (1) et (2) ;
(1c) au moins un catalyseur de polycondensation en vue de la formation dudit réseau (1) ;
et ledit réseau (2) est constitué à partir de :
(2a) en tant que constituant de base, au moins un monomère principal, acrylique ou méthacrylique, ne comportant pas de groupe fonctionnel hydrophile ;
(2b) le cas échéant, une quantité efficace d'au moins un agent de réticulation du (ou des) monomère(s) (2a) ;
(2c) au moins un initiateur de polymérisation radicalaire en vue de la formation dudit réseau (2) ; et
(2d) le cas échéant jusqu'à 20% en poids par rapport au(x) monomère(s) (2a) d'au moins un monomère copolymérisable avec le (ou les) monomère(s) (2a) ;
la composition polymère renfermant également :
(I) au moins un inhibiteur de formation de radicaux libres dans une proportion comprise entre 0,1% et 0,2% en poids par rapport au(x) monomère(s) (2a),
tous les constituants de la composition étant destinés à être mélangés simultanément.

**2.** Composition polymère selon la revendication 1, caractérisée par le fait que l'agent de réticulation ($1b_1$) est choisi parmi :
. les trialkyloxysilanes de formule :

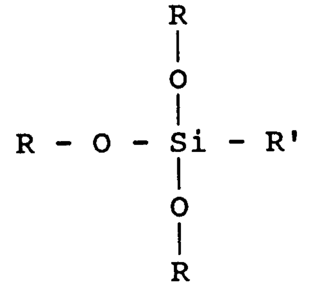

où :
- chaque R est un groupe méthyle ou éthyle ; et
- R' représente hydrogène, méthyle ou éthyle ;

. les tétraalkyloxysilanes de formule :

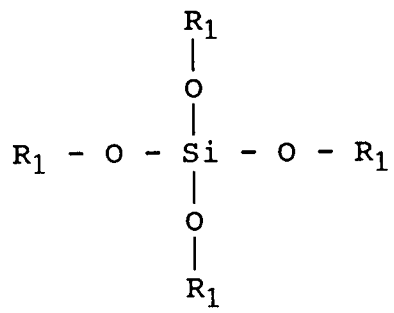

ou :
- chaque $R_1$ représente méthyle, éthyle, propyle ou butyle,

ainsi que

. les composés de formule :

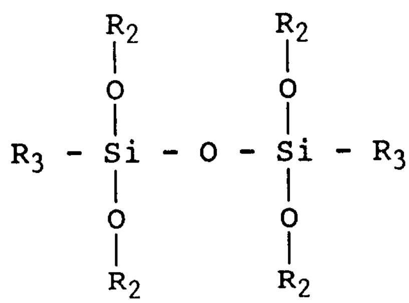

où :
- $R_2$ signifie méthyle ; et
- $R_3$ signifie méthyle ou éthyle.

**3.** Composition selon la revendication 1, caractérisée par le fait que l'agent de pontage ($1b_2$) est choisi parmi les trialkyloxysilanes comportant un groupe insaturé.

**4.** Composition selon l'une des revendications 1 à 3, caractérisée par le fait que le catalyseur (1c) est choisi parmi les sels organiques de l'étain, du zinc et du fer, ainsi que parmi les titanates.

**5.** Composition selon l'une des revendications 1 à 4, caractérisée par le fait que le constituant (2b) est choisi parmi les composés di- ou polyvinyliques, les di- ou polyesters d'acides mono- ou polycarboxyliques insaturés avec des polyols, les bis(méth)acrylamides, les esters carbamyliques, les éthers di- ou poly(méth)allyliques de polyols, les esters di- ou polyallyliques d'acides polycarboxyliques, et les esters d'acides mono- ou polycarboxyliques insaturés avec des éthers mono(méth)allyliques de polyols, ainsi que le N-méthylol (méth)acrylamide et le (méth)acrylate de glycidyle.

**6.** Composition selon l'une des revendications 1 à 5, caractérisée par le fait que l'inhibiteur (I) est choisi parmi les phénols à encombrement stérique, l'hydroquinone et la benzophénone.

**7.** Composition selon l'une des revendications 1 à 6, caractérisée par le fait que le constituant (1b) est présent dans une quantité telle que le rapport du nombre des fonctions assurant la formation du réseau dudit constituant (1b) au nombre de fonctions SiOH du prépolymère (1a) soit compris entre 1 et 4.

8. Composition selon l'une des revendications 1 à 7, caractérisée par le fait que les constituants (1a) et (2a) sont présents dans un rapport pondéral de 5/95 à 95/5.

9. Composition selon l'une des revendications 1 à 8, caractérisée par le fait qu'elle comporte une quantité efficace d'au moins un adjuvant choisi parmi les limiteurs de chaîne, les agents ignifugeants, les pigments solubles dans les monomères (2a), les absorbeurs du rayonnement ultraviolet et les agents démoulants.

10. Procédé de fabrication d'un article en une matière polymère dont la composition est telle que définie à l'une des revendications 1 à 9, caractérisé par le fait que :
(I) dans une première étape, on réalise le mélange de tous les constituants des réseaux (1) et (2), le constituant (1c) étant incorporé en dernier lieu dans ledit mélange, lequel contient également une quantité du (ou des) inhibiteur(s) (I) de formation de radicaux libres, qui est suffisante pour empêcher au départ la production, par l'initiateur (2c), de radicaux libres qui, par combinaison avec le catalyseur (1c), annihileraient les propriétés catalytiques de ce dernier, soit entre 0,1% et 0,2% en poids d'au moins un tel inhibiteur (I) par rapport au(x) monomère(s) (2a), afin de permettre la formation du réseau (1) avant celle du réseau (2) ;
(II) dans une seconde étape, on introduit le mélange obtenu dans un moule, à la température ambiante ;
(III) dans une troisième étape, dès que le mélange placé dans le moule a formé un gel, on porte la température à une valeur comprise entre 40° C et 80° C environ ; et
(IV) dans une quatrième étape, on laisse refroidir le mélange polymérisé dans le moule, avant de procéder au démoulage.

11. Procédé selon la revendication 10, caractérisé par le fait qu'on réalise un dégazage sous vide du mélange de la première étape avant et après l'introduction dans le moule.

12. Procédé selon l'une des revendications 10 et 11, caractérisé par le fait que l'on conduit la polymérisation de la troisième étape pendant une durée de 2 à 60 heures environ.

13. Articles obtenus à partir du matériau polymère tel que défini à l'une des revendications 1 à 9.

14. Articles selon la revendication 13, éventuellement transparents, de type plaques, feuilles et films.

**Revendications pour l'Etat contractant suivant : ES**

1. Procédé de fabrication d'une composition pour une matière polymère devant former deux réseaux polymères interpénétrés, l'un étant un réseau de polysiloxane (1), et l'autre étant un réseau acrylique (2), caractérisé par le fait qu'on mélange simultanément les constituants suivants :
(1a) en tant que constituant de base dudit réseau (1), au moins un polymère précurseur de masse moléculaire comprise entre 300 et 30 000, choisi parmi les polydiméthylsiloxanes $\alpha,\omega$-dihydroxylés et les poly(diméthyldiphényl)siloxanes $\alpha,\omega$-dihydroxylés renfermant au minimum 70% de motifs diméthylsiloxane ;
(1b) une quantité efficace d'au moins un agent de réticulation ($1b_1$) du (ou des) polymère(s) devant être formé(s) à partir de (1a) et/ou d'au moins un agent de pontage ($1b_2$) destiné à assurer la réticulation de ce (ou ces) polymère(s) en formant aussi une liaison entre les réseaux (1) et (2) ;
(1c) au moins un catalyseur de polycondensation, incorporé en dernier lieu, en vue de la formation dudit réseau (1) ;
(2a) en tant que constituant de base dudit réseau (2), au moins un monomère principal, acrylique ou méthacrylique, ne comportant pas de groupe fonctionnel hydrophile ;
(2b) le cas échéant, une quantité efficace d'au moins un agent de réticulation du (ou des) monomère(s) (2a) ;
(2c) au moins un initiateur de polymérisation radicalaire en vue de la formation dudit réseau (2) ; et
(2d) le cas échéant jusqu'à 20% en poids par rapport au(x) monomère(s) (2a) d'au moins un monomère copolymérisable avec le (ou les) monomère(s) (2a) ;
(I) au moins un inhibiteur de formation de radicaux libres dans une proportion comprise entre 0,1% et 0,2% en poids par rapport au(x) monomère(s) (2a);
les constituants (1a) à (1c) permettant de former ledit réseau (1), et les constituants (2a) à (2d), ledit

réseau (2).

2. Procédé selon la revendication 1, caractérisé par le fait qu'on choisit l'agent de réticulation ($1b_1$) parmi :

. les trialkyloxysilanes de formule :

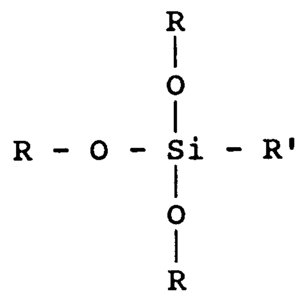

où :
- chaque R est un groupe méthyle ou éthyle ; et
- R' représente hydrogène, méthyle ou éthyle ;

. les tétraalkyloxysilanes de formule :

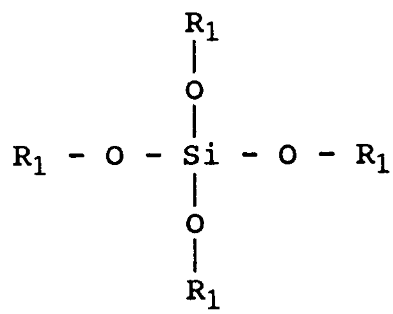

où :
- chaque $R_1$ représente méthyle, éthyle, propyle ou butyle,

ainsi que

. les composés de formule :

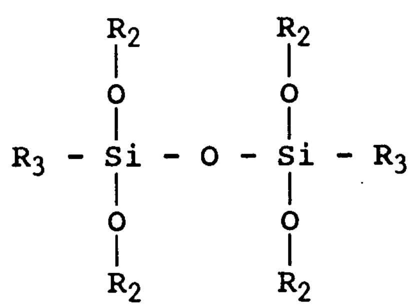

où :
- $R_2$ signifie méthyle ; et
- $R_3$ signifie méthyle ou éthyle.

3. Procédé selon la revendication 1, caractérisé par le fait qu'on choisit l'agent de pontage ($1b_2$) parmi les trialkyloxysilanes comportant un groupe insaturé.

4. Procédé selon l'une des revendications 1 à 3, caractérisé par le fait qu'on choisit le catalyseur (1c) parmi les sels organiques de l'étain, du zinc et du fer, ainsi que parmi les titanates.

**5.** Procédé selon l'une des revendications 1 à 4, caractérisé par le fait qu'on choisit le constituant (2b) parmi les composés di- ou polyvinyliques, les di- ou polyesters d'acides mono- ou polycarboxyliques insaturés avec des polyols, les bis(méth)acrylamides, les esters carbamyliques, les éthers di- ou poly-(méth)allyliques de polyols, les esters di- ou polyallyliques d'acides polycarboxyliques, et les esters d'acides mono- ou polycarboxyliques insaturés avec des éthers mono(méth)allyliques de polyols, ainsi que le N-méthylol (méth)acrylamide et le (méth)acrylate de glycidyle.

**6.** Procédé selon l'une des revendications 1 à 5, caractérisé par le fait qu'on choisit l'inhibiteur (I) parmi les phénols à encombrement stérique, l'hydroquinone et la benzophénone.

**7.** Procédé selon l'une des revendications 1 à 6, caractérisé par le fait que le constituant (1b) est présent dans une quantité telle que le rapport du nombre des fonctions assurant la formation du réseau dudit constituant (1b) au nombre de fonctions SiOH du prépolymère (1a) soit compris entre 1 et 4.

**8.** Procédé selon l'une des revendications 1 à 7, caractérisé par le fait que les constituants (1a) et (2a) sont présents dans un rapport pondéral de 5/95 à 95/5.

**9.** Procédé selon l'une des revendications 1 à 8, caractérisé par le fait qu'on ajoute au mélange une quantité efficace d'au moins un adjuvant choisi parmi les limiteurs de chaîne, les agents ignifugeants, les pigments solubles dans les monomères (2a), les absorbeurs du rayonnement ultraviolet et les agents démoulants.

**10.** Procédé de fabrication d'un article en une matière polymère devant former deux réseaux polymères interpénétrés, l'un étant un réseau de polysiloxane (1), et l'autre étant un réseau acrylique (2), les constituants desdits réseaux étant définis à l'une des revendications 1 à 9, caractérisé par le fait que :

(I) dans une première étape, on réalise le mélange de tous les constituants des réseaux (1) et (2), le constituant (1c) étant incorporé en dernier lieu dans ledit mélange, lequel contient également une quantité du (ou des) inhibiteur(s) (I) de formation de radicaux libres, qui est suffisante pour empêcher au départ la production, par l'initiateur (2c), de radicaux libres qui, par combinaison avec le catalyseur (1c), annihileraient les propriétés catalytiques de ce dernier, soit entre 0,1% et 0,2% en poids d'au moins un tel inhibiteur (I) par rapport au(x) monomère(s) (2a), afin de permettre la formation du réseau (1) avant celle du réseau (2) ;

(II) dans une seconde étape, on introduit le mélange obtenu dans un moule, à la température ambiante ;

(III) dans une troisième étape, dès que le mélange placé dans le moule a formé un gel, on porte la température à une valeur comprise entre 40 °C et 80 °C environ ; et

(IV) dans une quatrième étape, on laisse refroidir le mélange polymérisé dans le moule, avant de procéder au démoulage.

**11.** Procédé selon la revendication 10, caractérisé par le fait qu'on réalise un dégazage sous vide du mélange de la première étape avant et après l'introduction dans le moule.

**12.** Procédé selon l'une des revendications 10 et 11, caractérisé par le fait que l'on conduit la polymérisation de la troisième étape pendant une durée de 2 à 60 heures environ.

**13.** Articles obtenus à partir du matériau polymère préparé par le procédé tel que défini à l'une des revendications 1 à 9, ou fabriqués par le procédé tel que défini à l'une des revendications 10 à 12.

**14.** Articles selon la revendication 13, éventuellement transparents, de type plaques, feuilles et films.

**Claims**

**Claims for the following Contracting States : AT, BE, CH, DE, FR, GB, GR, IT, LI, LU, NL, SE**

**1.** Composition for a polymeric material which is to form two interpenetrating polymeric networks, one being a polysiloxane network (1) and the other being an acrylic network (2), characterised in that the said network (1) is made up from:

(1a) as base constituent, at least one precursor polymer with a molecular mass of between 300 and 30,000, chosen from $\alpha,\omega$-dihydroxylated polydimethylsiloxanes and $\alpha,\omega$-dihydroxylated poly-

(dimethyldiphenyl)siloxanes containing at least 70 % of dimethylsiloxane units;

(1b) an effective quantity of at least one agent ($1b_1$) for crosslinking the polymer(s) which is (are) to be formed from (1a) and/or of at least one bridging agent ($1b_2$) intended to ensure the crosslinking of this (or these) polymer(s), thus forming a connection between the networks (1) and (2);

(1c) at least one polycondensation catalyst with a view to forming the said network (1);

and the said network (2) is made up from:

(2a) as base constituent, at least one acrylic or methacrylic main monomer containing no hydrophilic functional group;

(2b) if appropriate, an effective quantity of at least one agent for crosslinking the monomer(s) (2a);

(2c) at least one radical polymerisation initiator with a view to forming the said network (2); and

(2d) if appropriate up to 20 % by weight relative to the monomer(s) (2a) of at least one monomer capable of being copolymerised with the monomer(s) (2a);

the polymeric composition also including:

(I) at least one inhibitor of free radical formation in a proportion of between 0.1 % and 0.2 % by weight relative to the monomer(s) (2a),

all the constituents of the composition being intended to be mixed simultaneously.

**2.** Polymeric composition according to Claim 1, characterised in that the crosslinking agent ($1b_1$) is chosen from:

trialkyloxysilanes of formula:

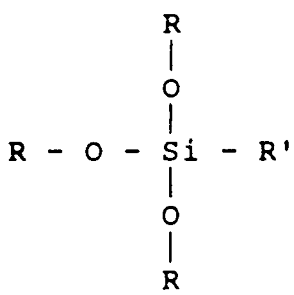

where:

- each R is a methyl or ethyl group; and
- R' denotes hydrogen, methyl or ethyl;

tetraalkyloxysilanes of formula:

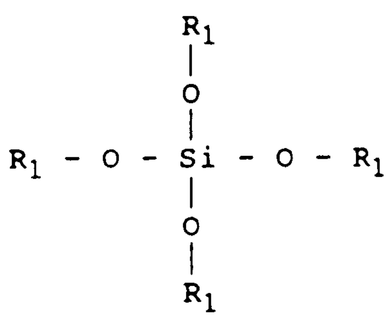

where:

- each $R_1$ denotes methyl, ethyl, propyl or butyl,

as well as

the compounds of formula:

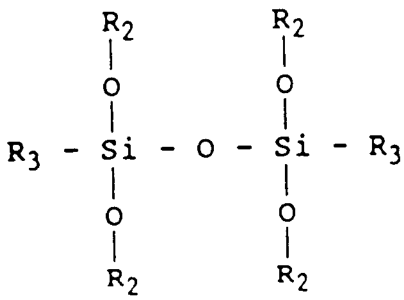

where:

- $R_2$ denotes methyl; and
- $R_3$ denotes methyl or ethyl.

**3.** Composition according to Claim 1, characterised in that the bridging agent ($1b_2$) is chosen from trialkyloxysilanes containing an unsaturated group.

**4.** Composition according to one of Claims 1 to 3, characterised in that the catalyst (1c) is chosen from organic salts of tin, zinc and iron, as well as from titanates.

**5.** Composition according to one of Claims 1 to 4, characterised in that the constituent (2b) is chosen from di- or polyvinyl compounds, di- or polyesters of unsaturated mono- or polycarboxylic acids with polyols, bis(meth)acrylamides, carbamyl esters, di- or poly(meth)allyl ethers of polyols, di- or polyallyl esters of polycarboxylic acids and esters of unsaturated mono- or polycarboxylic acids with polyol mono(meth)-allyl ethers, as well as N-methylol(meth)acrylamide and glycidyl (meth)acrylate.

**6.** Composition according to one of Claims 1 to 5, characterised in that the inhibitor (I) is chosen from sterically hindered phenols, hydroquinone and benzophenone.

**7.** Composition according to one of Claims 1 to 6, characterised in that the constituent (1b) is present in a quantity such that the ratio of the number of the functional groups responsible for the formation of the network of the said constituent (1b) to the number of SiOH functional groups of the prepolymer (1a) is between 1 and 4.

**8.** Composition according to one of Claims 1 to 7, characterised in that the constituents (1a) and (2a) are present in a weight ratio of 5/95 to 95/5.

**9.** Composition according to one of Claims 1 to 8, characterised in that it comprises an effective quantity of at least one adjuvant chosen from chain limiters, flame retardants, pigments soluble in the monomers (2a), ultraviolet radiation absorbers and demoulding agents.

**10.** Process for the manufacture of an article made of a polymeric material whose composition is as defined in one of Claims 1 to 9, characterised in that:

(I) in a first stage, mixing of all the constituents of the networks (1) and (2) is carried out, the constituent (1c) being incorporated last in the said mixture, which also contains a quantity of the inhibitor(s) (I) of free radical formation, which is sufficient to prevent, at the outset, the production, by the initiator (2c), of free radicals which, by combining with the catalyst (1c), would annihilate the catalytic properties of the latter, namely between 0.1 % and 0.2 % by weight of at least one such inhibitor (I) relative to the monomer(s) (2a), in order to permit the formation of the network (1) before that of the network (2);

(II) in a second stage, the mixture obtained is introduced into a mould, at ambient temperature;

(III) in a third stage, as soon as the mixture placed in the mould has formed a gel, the temperature is raised to a value of approximately between 40 ° C and 80 ° C; and

(IV) in a fourth stage, the polymerised mixture is allowed to cool in the mould before demoulding is performed.

**11.** Process according to Claim 10, characterised in that a degassing of the mixture from the first stage is carried out under vacuum before and after the introduction into the mould.

**12.** Process according to either of Claims 10 and 11, characterised in that the polymerisation of the third stage is carried out for a period of approximately from 2 to 60 hours.

**13.** Articles obtained from the polymeric material such as defined in one of Claims 1 to 9.

**14.** Optionally transparent articles according to Claim 13, of sheet, foil and film type.

**Claims for the following Contracting State : ES**

**1.** Process for the manufacture of a composition for a polymeric material which is to form two interpenetrating polymeric networks, one being a polysiloxane network (1) and the other being an acrylic network (2), characterised in that the following constituents are mixed simultaneously:

(1a) as base constituent of the said network (1), at least one precursor polymer with a molecular mass of between 300 and 30,000, chosen from α,ω-dihydroxylated polydimethylsiloxanes and α,ω-dihydroxylated poly(dimethyldiphenyl)siloxanes containing at least 70 % of dimethylsiloxane units;

(1b) an effective quantity of at least one agent ($1b_1$) for crosslinking the polymer(s) which is (are) to be formed from (1a) and/or of at least one bridging agent ($1b_2$) intended to ensure the crosslinking of this (or these) polymer(s), thus forming a connection between the networks (1) and (2);

(1c) at least one polycondensation catalyst, incorporated last, with a view to forming the said network (1);

(2a) as base constituent of the said network (2), at least one acrylic or methacrylic main monomer containing no hydrophilic functional group;

(2b) if appropriate, an effective quantity of at least one agent for crosslinking the monomer(s) (2a);

(2c) at least one radical polymerisation initiator with a view to forming the said network (2); and

(2d) if appropriate up to 20 % by weight relative to the monomer(s) (2a) of at least one monomer capable of being copolymerised with the monomer(s) (2a);

(I) at least one inhibitor of free radical formation in a proportion of between 0.1 % and 0.2 % by weight relative to the monomer(s) (2a);

the constituents (1a) to (1c) permitting the said network (1) to be formed and the constituents (2a) to (2d) permitting the said network (2) to be formed.

**2.** Process according to Claim 1, characterised in that the crosslinking agent ($1b_1$) is chosen from:

trialkyloxysilanes of formula:

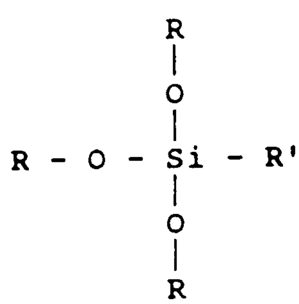

where:

- each R is a methyl or ethyl group; and
- R' denotes hydrogen, methyl or ethyl;

tetraalkyloxysilanes of formula:

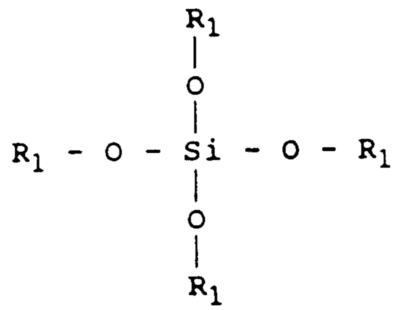

where:

- each $R_1$ denotes methyl, ethyl, propyl or butyl,

as well as

the compounds of formula:

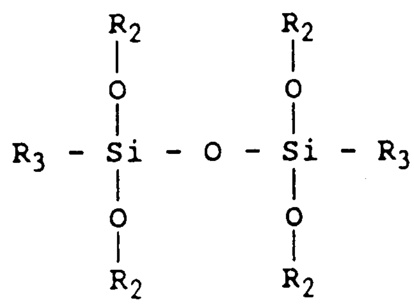

where:

- $R_2$ denotes methyl; and
- $R_3$ denotes methyl or ethyl.

**3.** Process according to Claim 1, characterised in that the bridging agent ($1b_2$) is chosen from trialkyloxysilanes containing an unsaturated group.

**4.** Process according to one of Claims 1 to 3, characterised in that the catalyst (1c) is chosen from organic salts of tin, zinc and iron, as well as from titanates.

**5.** Process according to one of Claims 1 to 4, characterised in that the constituent (2b) is chosen from di- or polyvinyl compounds, di- or polyesters of unsaturated mono- or polycarboxylic acids with polyols, bis(meth)acrylamides, carbamyl esters, di- or poly(meth)allyl ethers of polyols, di- or polyallyl esters of polycarboxylic acids and esters of unsaturated mono- or polycarboxylic acids with polyol mono(meth)-allyl ethers, as well as N-methylol(meth)acrylamide and glycidyl (meth)acrylate.

**6.** Process according to one of Claims 1 to 5, characterised in that the inhibitor (I) is chosen from sterically hindered phenols, hydroquinone and benzophenone.

**7.** Process according to one of Claims 1 to 6, characterised in that the constituent (1b) is present in a quantity such that the ratio of the number of the functional groups responsible for the formation of the network of the said constituent (1b) to the number of SiOH functional groups of the prepolymer (1a) is between 1 and 4.

**8.** Process according to one of Claims 1 to 7, characterised in that the constituents (1a) and (2a) are present in a weight ratio of 5/95 to 95/5.

**9.** Process according to one of Claims 1 to 8, characterised in that an effective quantity of at least one adjuvant chosen from chain limiters, flame retardants, pigments soluble in the monomers (2a), ultraviolet radiation absorbers and demoulding agents is added to the mixture.

**10.** Process for the manufacture of an article made of a polymeric material which is to form two interpenetrating polymeric networks, one being a polysiloxane network (1) and the other being an acrylic network (2), the constituents of the said networks being defined in one of Claims 1 to 9, characterised in that:

(I) in a first stage, mixing of all the constituents of the networks (1) and (2) is carried out, the constituent (1c) being incorporated last in the said mixture, which also contains a quantity of the inhibitor(s) (I) of free radical formation, which is sufficient to prevent, at the outset, the production, by the initiator (2c), of free radicals which, by combining with the catalyst (1c), would annihilate the catalytic properties of the latter, namely between 0.1 % and 0.2 % by weight of at least one such inhibitor (I) relative to the monomer(s) (2a), in order to permit the formation of the network (1) before that of the network (2);

(II) in a second stage, the mixture obtained is introduced into a mould, at ambient temperature;

(III) in a third stage, as soon as the mixture placed in the mould has formed a gel, the temperature is raised to a value of approximately between 40 ° C and 80 ° C; and

(IV) in a fourth stage, the polymerised mixture is allowed to cool in the mould before demoulding is performed.

**11.** Process according to Claim 10, characterised in that a degassing of the mixture from the first stage is carried out under vacuum before and after the introduction into the mould.

**12.** Process according to either of Claims 10 and 11, characterised in that the polymerisation of the third stage is carried out for a period of approximately from 2 to 60 hours.

**13.** Articles obtained from the polymeric material prepared by the process such as defined in one of Claims 1 to 9 or manufactured by the process such as defined in one of Claims 10 to 12.

**14.** Optionally transparent articles according to Claim 13, of sheet, foil and film type.

**Patentansprüche**
**Patentansprüche für folgende Vertragsstaaten : AT, BE, CH, DE, FR, GB, GR, IT, LI, LU, NL, SE**

**1.** Polymerzusammensetzung, die zwei sich durchdringende Polymernetzwerke bilden soll, wobei das eine ein Polysiloxannetzwerk (1) darstellt und das andere ein Acrylnetzwerk (2), dadurch gekennzeichnet, daß das Netzwerk (1) gebildet wird, ausgehend von:

(1a) einem Basismaterial, bestehend aus mindestens einem Vorpolymeren der molaren Masse zwischen 300 und 30000, ausgewählt aus $\alpha,\omega$-dihydroxylierten Polydimethylsiloxanen und $\alpha,\omega$-dihydroxylierten Poly(dimethyldiphenyl)siloxanen, die zumindest 70 % Dimethylsiloxan-Einheiten enthalten;

(1b) einer wirksamen Menge zumindest eines Brückenbildners ($1b_1$) für das (die) ausgehend von (1a) zu bildende(n) polymere(n) und/oder zumindest eines Vernetzungsmittels ($1b_2$), das zur Vernetzung dieses (dieser) Polymeren, unter Ausbildung einer Bindung zwischen den Netzwerken (1) und (2), dient;

(1c) mindestens einem Polykondensationskatalysator für die Bildung des genannten Netzwerks (1);

und das genannte Netzwerk (2) gebildet wird, ausgehend von:

(2a) einem Basismaterial, bestehend aus mindestens einem acrylischen oder methacrylischen Hauptmonomeren, welches keine hydrophile Funktionsgruppe enthält;

(2b) gegebenenfalls einer wirksamen Menge zumindest eines Vernetzungsmittels des (der) Monomeren (2a);

(2c) mindestens einem radikalischen Polymerisationsinitiator zur Bildung des genannten Netzwerks (2); und

(2d) gegebenenfalls bis zu 20 Gewichtsprozent, in Bezug auf das (die) Monomere (2a), mindestens einem mit dem (den) Monomeren (2a) copolymerisierbarem Monomeren;

wobei die Polymerzusammensetzung ebenfalls noch enthält:

(l) mindestens einen Radikalbildungs-Inhibitor in einem Verhältnis von 0,1 bis 0,2 Gewichtsprozent, bezogen auf das (die) Monomere(n) (2a),

und alle Bestandteile der Zusammensetzung gleichzeitig vermischt werden.

**2.** Polymerzusammensetzung gemäß Anspruch 1, dadurch gekennzeichnet, daß das Vernetzungsmittel (1b) ausgewählt wird aus:

. den Tetraalkoxysilanen der Formel:

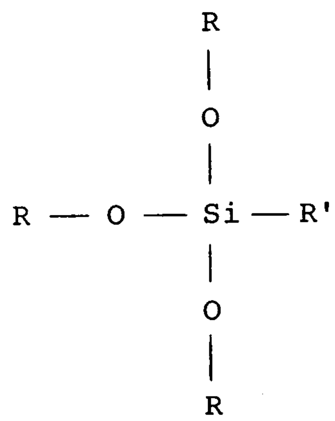

wobei:

- jeder Rest R eine Methyl- oder Ethylgruppe darstellt; und
- R' ein Wasserstoffatom, eine Methyl- oder Ethylgruppe bedeutet;

. den Tetraalkoxysilanen der Formel:

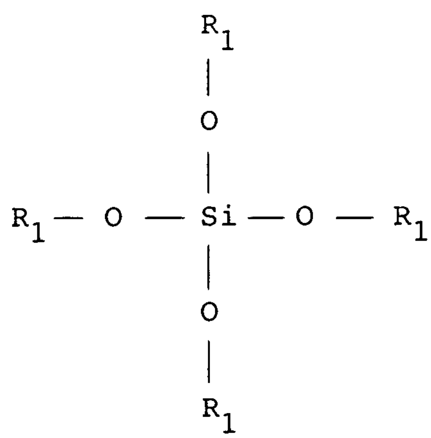

wobei:

- jeder $R_1$-Rest eine Methyl-, Ethyl-, Propyl- oder Butylgruppe darstellt,

ebenso aus

. Verbindungen der Formel:

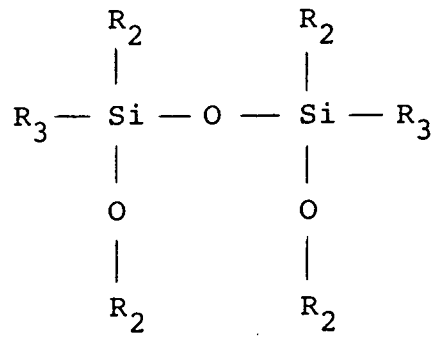

wobei:
- $R_2$ einen Methylrest und
- $R_3$ einen Methyl- oder Ethylrest bedeuten.

**3.** Zusammensetzung gemäß Anspruch 1, dadurch gekennzeichnet, daß das Vernetzungsmittel ($1b_2$) ausgewählt wird aus eine ungesättigte Gruppe enthaltenden Trialkoxysilanen.

**4.** Zusammensetzung gemäß einem der Ansprüche 1 bis 3, dadurch gekennzeichnet, daß der Katalysator (1c) ausgewählt wird aus organischen Salzen des Zinns, Zinks oder Eisens sowie aus Titanaten.

**5.** Zusammensetzung gemäß einem der Ansprüche 1 bis 4, dadurch gekennzeichnet, daß der Bestandteil (2b) ausgewählt wird aus di- oder polyvinylischen Verbindungen, Di- oder Polyestern von ungesättigten Mono- oder Polycarbonsäuren und Polyolen, Bis (meth)acrylamiden, Carbamylestern, Di- oder Poly-(meth)allylethern aus Polyolen, Di- oder Polyallylestern von Polycarbonsäuren und den Estern aus ungesättigten Mono- und Polycarbonsäuren mit Mono(meth)allylethern von Polyolen sowie aus N-Methylol(meth)acryamid oder Glycidyl-(Meth)acrylat.

**6.** Zusammensetzung gemäß einem der Ansprüche 1 bis 5, dadurch gekennzeichnet, daß der Inhibitor (I) ausgewählt wird aus sterisch gehinderten Phenolen, Hydrochinon und Benzochinon.

**7.** Zusammensetzung gemäß einem der Ansprüche 1 bis 6, dadurch gekennzeichnet, daß der Bestandteil (1b) in einer derartigen Menge vorhanden ist, daß das Verhältnis der Anzahl der Funktionsheiten des genannten Bestandteils (1b), die die Netzwerkbildung ermöglichen, zur Anzahl der SiOH-Funktionen des Vorpolymeren (1a) wie 1 bis 4 beträgt.

**8.** Zusammensetzung gemäß einem der Ansprüche 1 bis 7, dadurch gekennzeichnet, daß die Bestandteile (1a) und (2a) in einem Gewichtsverhältnis von 5:95 bis 95:5 vorhanden sind.

**9.** Zusammensetzung gemäß einem der Ansprüche 1 bis 8, dadurch gekennzeichnet, daß sie eine wirksame Menge mindestens einer Hilfssubstanz enthält, ausgewählt aus Reglersubstanzen, flammhemmenden Mitteln, in den Monomeren (2a) löslichen Pigmenten, UV-Licht absorbierenden Substanzen und Entformungsmitteln.

**10.** Verfahren zur Herstellung eines Gegenstandes aus einem polymeren Material, dessen Zusammensetzung durch einen der Ansprüche 1 bis 9 definiert ist, dadurch gekennzeichnet, daß man:
(I) in einem ersten Schritt die Vermischung aller Bestandteile der Netzwerke (1) und (2) durchführt, wobei der Bestandteil (1c) zuletzt zur Mischung hinzugegeben wird, die ebenfalls eine Menge an Radikalinhibitor(en) (I) enthält, die ausreicht, um zu Reaktionsbeginn durch den Initiator (2c) die Bildung von freien Radikalen zu verhindern, die in Verbindung mit dem Katalysator (1c) dessen katalytische Wirksamkeit aufheben würden, so daß die Mischung zwischen 0,1 und 0,2 Gew. % zumindest eines solchen Inhibitors (I) bezogen auf das (die) Monomeren (2a) enthält, damit die Bildung des Netzwerks (1) vor der des Netzwerks (2) erfolgt;
(II) in einem zweiten Schritt die erhaltene Mischung in eine Form bei Raumtemperatur einbringt.

(III) in einem dritten Schritt, sobald die in die Form eingegebene Mischung ein Gel gebildet hat, die Temperatur auf einen Wert zwischen ungefähr 40 ° C und 80 ° C bringt; und
(IV) in einem vierten Schritt die in Form polymerisierte Mischung vor dem Ausstoßen des Formteils abkühlt.

**11.** Verfahren gemäß Anspruch 10, dadurch gekennzeichnet, daß eine Vakuumentgasung der Mischung im ersten Schritt vor und nach der Eingabe in das Werkzeug erfolgt.

**12.** Verfahren gemäß einem der Ansprüche 10 oder 11, dadurch gekennzeichnet, daß die Polymerisation im dritten Schritt innerhalb von ungefähr 2 bis 60 Stunden durchgeführt wird.

**13.** Gegenstände, die aus einem polymeren Material hergestellt werden, das durch die Ansprüche 1 bis 9 definiert ist.

**14.** Gegenstände - auch transparente - gemäß Anspruch 13, die Platten, Folien oder Filme darstellen.

**Patentansprüche für folgenden Vertragsstaat : ES**

**1.** Verfahren zur Herstellung einer Zusammensetzung für ein Polymermaterial, das zwei sich durchdringende Polymernetzwerke bilden soll, wobei das eine ein Polysiloxannetzwerk (1) und das andere ein Acrylnetzwerk (2) ist, dadurch gekennzeichnet, das man gleichzeitig die folgenden Bestandteile mischt:
(1a) als Basisbestandteil des genannten Netzwerks (1) wenigstens ein Vorpolymeres einer Molmasse zwischen 300 und 30000, ausgewählt aus den $\alpha,\omega$-dihydroxylierten Polydimethylsiloxanen und den $\alpha,\omega$-dihydroxylierten Poly(dimethyldiphenyl)siloxanen, die mindestens 70 % Dimethylsiloxan-Einheiten enthalten;
(1b) einer wirksamen Menge zumindest eines Brückenbildners ($1b_1$) für das (die) ausgehend von (1a) zu bildende(n) Polymere(n) und/oder zumindest eines Vernetzungsmittels ($1b_2$), das zur Vernetzung dieses (dieser) Polymeren, unter Ausbildung einer Bindung zwischen den Netzwerken (1) und (2), dient;
(1c) mindestens einem Polykondensationskatalysator für die Bildung des genannten Netzwerks (1);
(2a) als Basisbestandteil des genannten Netzwerks (2) wenigstens ein acrylisches oder methacrylisches Hauptmonomer, welches keine hydrophile Funktionsgruppe enthält;
(2b) gegebenenfalls einer wirksamen Menge zumindest eines Vernetzungsmittels des (der) Monomeren (2a);
(2c) mindestens einem radikalischen Polymerisationsinitiator zur Bildung des genannten Netzwerks (2); und
(2d) gegebenenfalls bis zu 20 Gewichtsprozent, in Bezug auf das (die) Monomere (2a), mindestens einem mit dem (den) Monomeren (2a) copolymerisierbarem Monomeren;
(I) mindestens einen Radikalbildungs-Inhibitor in einem Verhältnis von 0,1 bis 0,2 Gewichtsprozent, bezogen auf das (die) Monomere(n) (2a),
wobei das Netzwerk (1) aus dem Bestandteil (1a) bis (1c) und das Netzwerk (2) aus den Bestandteilen (2a) bis (2d) gebildet werden kann.

**2.** Verfahren nach Anspruch 1, dadurch gekennzeichnet, daß das Vernetzungsmittel (1b) ausgewählt wird aus:
. den Tetraalkoxysilanen der Formel:

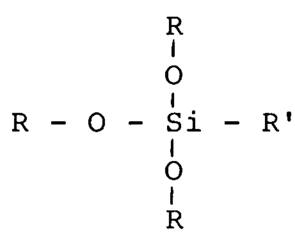

wobei:

- jeder Rest R eine Methyl- oder Ethylgruppe darstellt; und
- R' ein Wasserstoffatom, eine Methyl- oder Ethylgruppe bedeutet;

. den Tetraalkoxysilanen der Formel:

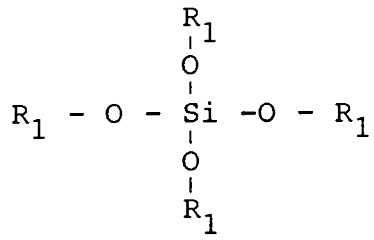

wobei:

- jeder $R_1$-Rest eine Methyl-, Ethyl-, Propyl- oder Butylgruppe darstellt,

ebenso aus

. Verbindungen der Formel:

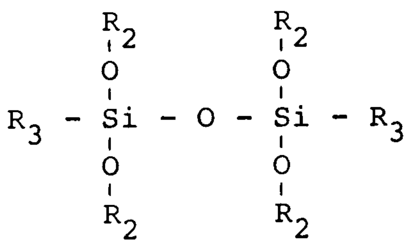

wobei:

- $R_2$ einen Methylrest und
- $R_3$ einen Methyl- oder Ethylrest bedeuten.

**3.** Verfahren nach Anspruch 1, dadurch gekennzeichnet, daß das Vernetzungsmittel ($1b_2$) ausgewählt wird aus eine ungesättigte Gruppe enthaltenden Trialkoxysilanen.

**4.** Verfahren nach einem der Ansprüche 1 bis 3, dadurch gekennzeichnet, daß der Katalysator (1c) ausgewählt wird aus organischen Salzen des Zinns, Zinks oder Eisens sowie aus Titanaten.

**5.** Verfahren nach einem der Ansprüche 1 bis 4, dadurch gekennzeichnet, daß der Bestandteil (2b) ausgewählt wird aus di- oder polyvinylischen Verbindungen, Di- oder Polyestern von ungesättigten Mono- oder Polycarbonsäuren und Polyolen, Bis(meth)acrylamiden, Carbamylestern, Di- oder Poly-(meth)allylethern aus Polyolen, Di- oder Polyallylestern von Polycarbonsäuren und den Estern aus ungesättigten Mono- und Polycarbonsäuren mit Mono(meth)allylethern von Polyolen sowie aus N-Methylol(meth)acryamid oder Glycidyl-(Meth) acrylat.

**6.** Verfahren nach einem der Ansprüche 1 bis 5, dadurch gekennzeichnet, daß der Inhibitor (I) ausgewählt wird aus sterisch gehinderten Phenolen, Hydrochinon und Benzochinon.

**7.** Verfahren nach einem der Ansprüche 1 bis 6, dadurch gekennzeichnet, daß der Bestandteil (1b) in einer derartigen Menge vorhanden ist, daß das Verhältnis der Anzahl der Funktionsheiten des genannten Bestandteils (1b), die die Netzwerkbildung ermöglichen, zur Anzahl der SiOH-Funktionen des Vorpolymeren (1a) wie 1 bis 4 beträgt.

**8.** Verfahren nach einem der Ansprüche 1 bis 7, dadurch gekennzeichnet, daß die Bestandteile (1a) und (2a) in einem Gewichtsverhältnis von 5:95 bis 95:5 vorhanden sind.

**9.** Verfahren nach einem der Ansprüche 1 bis 8, dadurch gekennzeichnet, daß man dem Gemisch eine wirksame Menge wenigstens einer Hilfssubstanz zusetzt, die ausgewählt ist aus Reglersubstanzen, flammhemmenden Mitteln, in den Monomeren (2a) löslichen Pigmenten, UV absorbierenden Substanzen und Entformungsmitteln.

**10.** Verfahren zur Herstellung eines Gegenstandes aus einem polymeren Material, das zwei einander durchdringende Polymernetzwerke bilden soll, wobei eines ein Polysiloxannetzwerk (1) und das andere ein Acrylnetzwerk (2) ist und die Bestandteile der genannten Netzwerke in einem der Ansprüche 1 bis 9 definiert sind, dadurch gekennzeichnet, daß man:
(I) in einem ersten Schritt die Vermischung aller Bestandteile der Netzwerke (1) und (2) durchführt, wobei der Bestandteil (1c) zuletzt zur Mischung hinzugegeben wird, die ebenfalls eine Menge an Radikalinhibitor(en) (I) enthält, die ausreicht, um zu Reaktionsbeginn durch den Initiator (2c) die Bildung von freien Radikalen zu verhindern, die in Verbindung mit dem Katalysator (1c) dessen katalytische Wirksamkeit aufheben würden, so daß die Mischung zwischen 0,1 und 0,2 Gew.% zumindest eines solchen Inhibitors (I) bezogen auf das (die) Monomeren (2a) enthält, damit die Bildung des Netzwerks (1) vor der des Netzwerks (2) erfolgt;
(II) in einem zweiten Schritt die erhaltene Mischung in eine Form bei Raumtemperatur einbringt.
(III) in einem dritten Schritt, sobald die in die Form eingegebene Mischung ein Gel gebildet hat, die Temperatur auf einen Wert zwischen ungefähr 40 ° C und 80 ° C bringt; und
(IV) in einem vierten Schritt die in Form polymerisierte Mischung vor dem Ausstoßen des Formteils abkühlt.

**11.** Verfahren nach Anspruch 10, dadurch gekennzeichnet, daß eine Vakuumentgasung der Mischung im ersten Schritt vor und nach der Eingabe in das Werkzeug erfolgt.

**12.** Verfahren nach einem der Ansprüche 10 oder 11, dadurch gekennzeichnet, daß die Polymerisation im dritten Schritt innerhalb von ungefähr 2 bis 60 Stunden durchgeführt wird.

**13.** Gegenstände, die aus einem Polymermaterial erhalten wurden, das nach dem in einem der Ansprüche 1 bis 9 definierten Verfahren oder nach dem Verfahren der Ansprüche 10 bis 12 hergestellt wurde.

**14.** Gegenstände nach Anspruch 13, die gegebenenfalls transparent sind und Platten, Folien oder Filme darstellen.